(19) Europäisches Patentamt
European Patent Office
Office européen des brevets

(11) **EP 3 708 992 B1**

(12) **EUROPEAN PATENT SPECIFICATION**

(45) Date of publication and mention
of the grant of the patent:
**16.10.2024 Bulletin 2024/42**

(21) Application number: **18875039.2**

(22) Date of filing: **06.11.2018**

(51) International Patent Classification (IPC):
***G01M 7/08*** *(2006.01)*

(52) Cooperative Patent Classification (CPC):
**G01M 5/0066; G01M 5/0025; G01M 7/08**

(86) International application number:
**PCT/JP2018/041089**

(87) International publication number:
**WO 2019/093294 (16.05.2019 Gazette 2019/20)**

(54) **ESTIMATING DEVICE, ESTIMATING METHOD, AND PROGRAM STORING MEDIUM**

SCHÄTZVORRICHTUNG, SCHÄTZVERFAHREN UND PROGRAMMSPEICHERMEDIUM

DISPOSITIF D'ESTIMATION, PROCÉDÉ D'ESTIMATION ET SUPPORT DE STOCKAGE DE PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2017 JP 2017215729**

(43) Date of publication of application:
**16.09.2020 Bulletin 2020/38**

(73) Proprietor: **NEC Corporation
Tokyo 108-8001 (JP)**

(72) Inventors:
  • **INOUE, Hirofumi
    Tokyo 108-8001 (JP)**
  • **TAKATA, Soichiro
    Tokyo 108-8001 (JP)**
  • **SHINODA, Shigeki
    Tokyo 108-8001 (JP)**
  • **KIKUCHI, Katsumi
    Tokyo 108-8001 (JP)**

(74) Representative: **Betten & Resch
Patent- und Rechtsanwälte PartGmbB
Maximiliansplatz 14
80333 München (DE)**

(56) References cited:
**WO-A1-2016/152143       WO-A1-2016/194331
WO-A1-2016/194331       JP-A- 2007 147 634
JP-A- H09 257 634        US-A1- 2008 078 247**

**Description**

**[Technical Field]**

The present invention relates to a technique of estimating strength of a pipe.

**[Background Art]**

There is a case where a pipe constituting a piping network for transporting a resource such as water, petroleum, or gas is used beyond a service life. Therefore, problems such as leakage of fluid due to deterioration of a pipe, and rapture accident of a pipe are caused. In order to prevent these problems, a method of inspecting or estimating strength of a pipe is developed.

PTL 1 describes a buried-pipe inspection method of inspecting, with high accuracy, a degree of deterioration of a buried pipe such as a buried pipe and a ceramic pipe forming a sewer pipeline, an agricultural water pipeline, and the like, by performing an impact elastic wave test.

**[Citation List]**

**[Patent Literature]**

[PTL 1] Japanese Unexamined Patent Application Publication No. 2012-118047

Further state of the art pipe structural health monitoring systems based on vibration monitoring are known from US 2008/078247 A1 and WO 2016/194331 A1. WO 2016/194331 A1 further discloses a model data calculating means for calculating theoretical values of vibration propagation velocities corresponding to measured values of the plurality of vibration frequencies, which model comprises the Young's modulus as parameter.

**[Summary of Invention]**

**[Technical Problem]**

The inspection method of a buried pipe described in PTL 1 is a method in which a deterioration state of a buried pipe is inspected from an inside of the pipe. However, in a pipe (hereinafter, referred to as a "water-filled pipe") like a water supply pipe in which the inside of the pipe is filled with a fluid such as water, it is not easy to inspect a deterioration state from the inside of the pipe.

The present invention is made for solving the above-described problem, and a main object of the present invention is to provide an estimating device and the like that are capable of easily estimating strength of a water-filled pipe.

**[Solution to Problem]**

An estimating device according to one aspect of the present invention is defined in independent claim 1.

An estimating method according to one aspect of the present invention is defined in independent claim 6.

A program according to one aspect of the present invention is defined in independent claim 7.

**[Advantageous Effects of Invention]**

According to the present invention, an estimating device and the like that are able to estimate strength of a water-filled pipe with ease can be provided.

**[Brief Description of Drawings]**

[Fig. 1] Fig. 1 is a diagram illustrating a configuration of an estimating device according to an example embodiment of the present invention.

[Fig. 2] Fig. 2 is a diagram illustrating a configuration when tensile strength of a pipe is estimated by use of the estimating device according to the example embodiment of the present invention.

[Fig. 3A] Fig. 3A is a diagram used for describing a frequency response function model used by a pipe rigidity variable estimating unit.

[Fig. 3B] Fig. 3B is another diagram used for describing the frequency response function model used by the pipe rigidity variable estimating unit.

[Fig. 4] Fig. 4 is a diagram illustrating an example of the frequency response function model assumed in the pipe rigidity variable estimating unit.

[Fig. 5] Fig. 5 is a diagram illustrating one example of a relation between an elasticity modulus of a pipe used in a strength estimating unit and strength of the pipe.

[Fig. 6] Fig. 6 is a flowchart illustrating an operation of the estimating device according to the example embodiment of the present invention.

[Fig. 7] Fig. 7 is a diagram illustrating one example of a response time waveform being response data measured by a measuring instrument.

[Fig. 8] Fig. 8 is a diagram illustrating one example of a response spectrum acquired for the response time waveform.

[Fig. 9] Fig. 9 is a diagram illustrating one example of an information processing device achieving the estimating device according to the example embodiment of the present invention.

## [Example Embodiment]

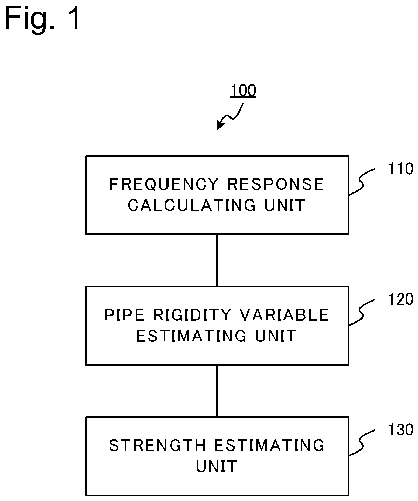

Each example embodiment of the present invention is described with reference to the accompanying drawings. First, a first example embodiment of the present invention is described. Fig. 1 is a diagram illustrating an estimating device according to the first example embodiment of the present invention.

As illustrated in Fig. 1, an estimating device 100 according to the first example embodiment of the present invention includes a frequency response calculating unit 110, a pipe rigidity variable estimating unit 120, and a strength estimating unit 130. The frequency response calculating unit 110 calculates, based on an excitation force when a pipe is excited and a vibration response propagating through the pipe, a frequency response function of the pipe. The pipe rigidity variable estimating unit 120 estimates, based on a frequency response function model representing a frequency response of the pipe, and the calculated frequency response function, a parameter relating to rigidity of the pipe. The strength estimating unit 130 estimates, based on a relation between the estimated parameter and strength of the pipe, strength of the pipe.

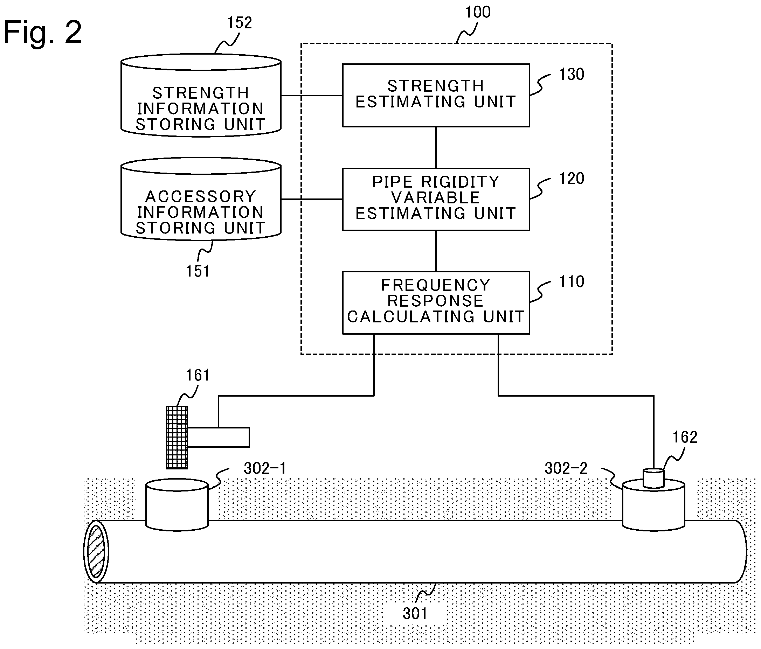

One example of a case in which strength of a pipe is estimated by using the estimating device 100 is described with reference to Fig. 2. Fig. 2 is an example of a case in which strength of a pipe 301 being a part of a water-supply network is estimated. Specifically, in the example illustrated in Fig. 2, the estimating device 100 estimates strength of the pipe 301. Note that, in the following example embodiment, a case in which the estimating device 100 estimates strength of a pipe configuring a water pipe is described as an example. Further, the pipe 301 is assumed to be the water-filled pipe described above. Specifically, a case in which the inside of the pipe 301 is filled with water by applying pressure to the water, or the water flowing into the pipe due to gravity is assumed. A main target of strength estimation by the estimating device 100 is a water-filled pipe.

In the example illustrated in Fig. 2, the pipe 301 is buried underground. Specifically, in the example illustrated in Fig. 2, the pipe 301 is assumed to be disposed in such a way that visual observation and contact of the pipe 301 is difficult in a normal condition. Further, accessories 302-1 and 302-2 are installed on the pipe 301. Each of the accessories 302-1 and 302-2 is, for example, a fire hydrant, an air valve, or a gate valve, but may be another equipment attached to the pipe. Each of the accessories 302-1 and 302-2 is installed in a manhole. Specifically, in the example illustrated in Fig. 2, each of the accessories 302-1 and 302-2 is assumed to be disposed at a position where a contact can be made in a normal condition.

As illustrated in Fig. 2, an instrument for acquiring data required when strength of the pipe 301 is estimated by the estimating device 100 is installed on each of the accessories 302-1 and 302-2.

An exciter 161 is installed on the accessory 302-1. The exciter 161 excites, for example, the accessory 302-1. With the excitation by the exciter 161, an elastic wave is excited in the fluid such as water filled inside the pipe 301. The elastic wave is also excited in the pipe 301.

As the exciter 161, a mechanism that is capable of exciting a vibration of a broad bandwidth is desirably used. As the exciter 161, for example, an impulse hammer, a hydraulic actuator, a pneumatic actuator, or a water-releasing pressure-variation generator is used, but another mechanism may be used as the exciter 161.

Further, the exciter 161 records an excitation force, which is magnitude of force when the accessory 302-1 is excited. Excitation force data, which are data recording the excitation force, are sent to, for example, the frequency response calculating unit 110 of the estimating device 100 via a wired or wireless communication network or another mechanism for data transmission.

A measuring instrument 162 is installed on the accessory 302-2. The measuring instrument 162 measures an elastic wave propagating through the fluid such as water inside the pipe 301 and the pipe 301. The measuring instrument 162 mainly measures an elastic wave generated by excitation by the exciter 161 and propagating through the fluid such as water inside the pipe 301 and the pipe 301.

As the measuring instrument 162, a sensor for measuring a vibration of a solid body is used. Examples of the measuring instrument 162 include a piezoelectric type acceleration sensor, a capacitive type acceleration sensor, an optical velocity sensor, a dynamic strain sensor, an eddy-current displacement sensor, a dial gauge, a digital image correlation measuring device, an optical fiber type strain gauge, a contact type displacement sensor, and a speckle light interferometer. However, another instrument may be used as the measuring instrument 162.

A measurement result by the measuring instrument 162 is sent to, for example, the frequency response calculating unit 110 of the estimating device 100 via a wired or wireless communication network or another mechanism for data transmission. With a time point at which the exciter 161 performs excitation as a reference, the measuring instrument 162 may send a result of a measurement performed for a time period from before to after the time point to each component of the estimating device 100. In the case described above, a length of the time period from before to after the reference time point at which the exciter 161 performs the excitation may be determined according to a time required for an elastic wave generated by the excitation to the accessory 302-1 by the exciter 161 to propagate to the measuring instrument 162.

Note that, as described above, the pipe 301 is assumed to be buried underground, and visual observation and contact of the pipe 301 is assumed to be difficult. Therefore, the exciter 161 and the measuring instrument 162 are exemplified in such a way as to be attached to the accessories 302. However, when it is possible to make contact with the pipe 301, each of the exciter 161 and the measuring instrument 162 may be directly installed on, for example, the pipe 301.

Further, in the example illustrated in Fig. 2, the pipe rigidity variable estimating unit 120 of the estimating device 100 is connected to an accessory information storing unit 151. Specifically, when estimating a parameter that relates to rigidity of a pipe, the pipe rigidity variable estimating unit 120 may use information stored in the accessory information storing unit 151 as necessary.

Similarly, in the example illustrated in Fig. 2, the strength estimating unit 130 of the estimating device 100 is connected to a strength information storing unit 152. Specifically, when estimating strength of a pipe, the strength estimating unit 130 may use information stored in the strength information storing unit 152 as necessary.

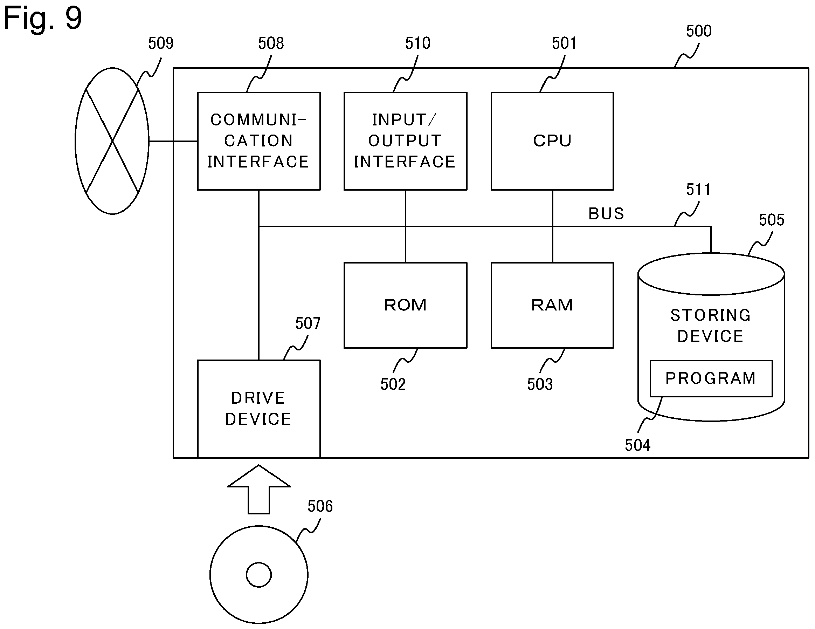

Next, each component of the estimating device 100 according to the present example embodiment is described. Note that, in each example embodiment of the present invention, each component of the estimating device 100 represents a block of a function unit. Some or all of each component of each device is achieved by, for example, any combination of an information processing device 500 and a program, such as illustrated in Fig. 9. The information processing device 500 includes, as one example, a configuration as follows.

- A central processing unit (CPU) 501

- A read only memory (ROM) 502

- A random access memory (RAM) 503

- A program 504 loaded on the RAM 503

- A storing device 505 storing the program 504

- A drive device 507 performing reading and writing of a recording medium 506

- A communication interface 508 connected to a communication network 509

- An input/output interface 510 performing input and output of data

-A bus 511 connecting each component

Each component of each device according to each example embodiment is achieved by the CPU 501 acquiring and executing the program 504 achieving a function of each component. The program 504 achieving a function of each component of each device is, for example, previously stored in the storing device 505 or the RAM 503, and read out by the CPU 501 as necessary. Note that, the program 504 may be provided to the CPU 501 via the communication network 509, or may be previously stored in the recording medium 506, read out by the drive device 507, and thereby provided to the CPU 501.

There are various modification examples of a method of achieving each device. For example, each device may be achieved by any combination of the information processing device 500 that is separated for each component and a program. Further, a plurality of components included in each device may be achieved by any combination of one information processing device 500 and a program.

Some or all of each component of each device is achieved by a dedicated or general-purpose circuit including a processor and the like, or a combination thereof. The dedicated or general-purpose circuit may be configured by a single chip, or may be configured by a plurality of chips connected to each other via a bus. Some or all of each component of each device may be achieved by a combination of the above-described circuit and the like and a program.

When some or all of each component of each device is achieved by a plurality of information processing devices and circuits and the like, the plurality of information processing devices and circuits and the like may be concentratedly or distributedly disposed. For example, the information processing devices and circuits and the like may be achieved as a form, such as a client-and-sever system and a cloud computing system, in which each of the information processing devices and circuits and the like is connected via a communication network.

Among the components of the estimating device 100, the frequency response calculating unit 110 is described first. The frequency response calculating unit 110 calculates, based on an excitation force when a pipe is excited and a vibration response propagating through the pipe, a frequency response function of the pipe. The frequency response function of the pipe is a function expressed in a frequency domain as a ratio of magnitude of the vibration response to the excitation force applied to the pipe.

The excitation force indicates, in a case where a pipe is excited, a temporal change in magnitude of force applied to the pipe. As one example, the excitation force indicates a temporal change in magnitude of force applied to the pipe 301 by the exciter 161 illustrated in Fig. 2. In the example illustrated in Fig. 2, the excitation force is assumed to be recorded at a time of excitation performed by the exciter 161. Excitation force data indicating the recorded excitation force are sent to the frequency response calculating unit 110 via a wired or wireless communication network or another means, as appropriate.

The vibration response is a response of the pipe or the fluid such as water inside the pipe to the excitation performed by the exciter 161. In the example illustrated in Fig. 2, the vibration response is acquired by the measuring instrument 162 measuring a temporal change of the elastic wave, which is generated by the excitation by the exciter 161 and propagating through the fluid such as water inside the pipe 301 and the pipe 301. In the example illustrated in Fig. 2, measured data indicating the vibration response measured by the measuring instrument 162 are sent to the frequency response calculating unit 110 via a wired or wireless communication network or another means, as appropriate.

The frequency response calculating unit 110 acquires, according to the claimed invention, a frequency response function of the pipe as follows. First, let excitation force data be f(t), and response data be x(t). Further, let functions in a frequency domain into which f(t) and x(t) are Fourier transformed be F($\omega$) and X($\omega$), respectively. The frequency response calculating unit 110 acquires F($\omega$) and X($\omega$) with respect to f(t) and x(t), respectively. $\omega$ represents an angular frequency.

Then, the frequency response calculating unit 110 acquires, by using the following expression (1), a frequency response function $H_{exp}(\omega)$.

$$H_{exp}(\omega) = \frac{X(\omega)}{F(\omega)} \qquad \cdots \qquad (1)$$

Note that, the frequency response calculating unit 110 may perform processing for improving a signal-to-noise ratio, as necessary. For example, the frequency response calculating unit 110 may perform averaging processing for acquiring an average value of frequency response functions acquired by a plurality of times of excitation and measurement of a response.

The pipe rigidity variable estimating unit 120 estimates a parameter relating to rigidity of the pipe, on the basis of the frequency response function model representing the frequency response of the pipe, and the frequency response function. As the frequency response function, $H_{exp}(\omega)$ acquired by the frequency response calculating unit 110 is used.

In the pipe rigidity variable estimating unit 120, an expression of the frequency response function model is determined in advance, according to a characteristic of the pipe being a target and $H_{exp}(\omega)$ acquired by the frequency response calculating unit 110. A frequency response function model specifically representing a frequency response of a pipe being a target is acquired by approximating an expression of the frequency response function model to a frequency response function that is actually measured. Therefore, the parameter relating to the rigidity of the pipe is acquired by approximating the frequency response function model to the frequency response function.

The pipe rigidity variable estimating unit 120 estimates the parameter relating to the rigidity of the pipe by acquiring such a parameter that the expression of the frequency response function model approximates the frequency response function $H_{exp}(\omega)$ acquired by the frequency response calculating unit 110.

Prior to a description of the parameter acquired by the pipe rigidity variable estimating unit 120, the expression of the frequency response function model used in the pipe rigidity variable estimating unit 120 is described. In the following description, the pipe is assumed to be a water-filled pipe whose inside is filled with water.

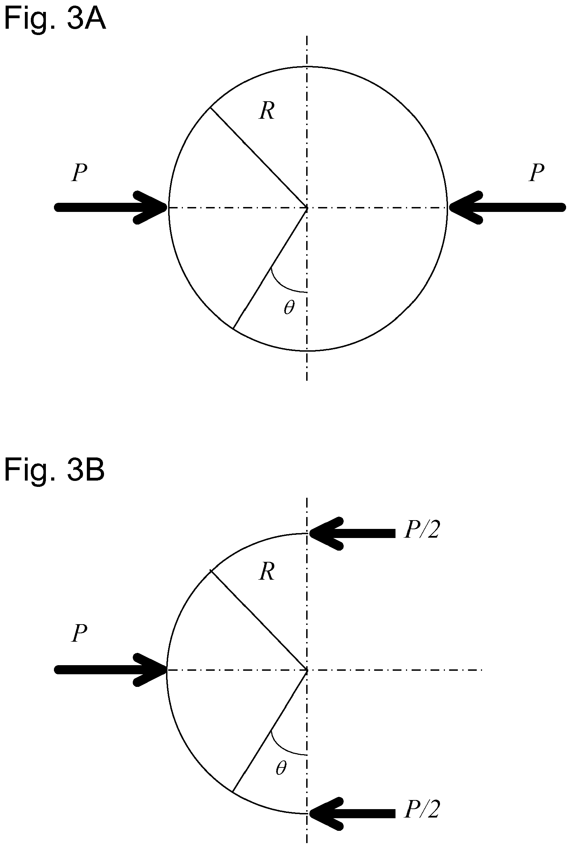

First, when it is assumed that a weight is applied from both sides of the pipe as illustrated in Figs. 3A and 3B, displacement w in a radius-direction of the pipe, which is generated when a weight P is applied from both sides of the pipe, is expressed as the following expression (2).

$$\text{w} = \frac{PR^3}{4EI}\left(\cos\theta + \theta\ \sin\theta - \frac{4}{\pi}\right) \quad \cdots \quad (2)$$

In the expression (2), R is a radius of the pipe, E is an elasticity modulus of the pipe, I is a second moment of area of the pipe, and $\theta$ is an angle of a position at which the displacement w is considered with respect to a reference direction. In the expression (2), one of the directions perpendicular to a direction in which the weight is applied is assumed to be the above-described reference direction, and $\theta$ is determined thereby.

Then, a pipe rigidity, which is the rigidity of the pipe, is defined by transforming the expression (2) and expressing the expression (2) in a form of the Hooke's law. Specifically, a pipe rigidity K is expressed as the following expression (3).

$$K = \frac{P}{w} = \frac{4EI}{R^3\left(\cos\theta + \theta\ \sin\theta - \frac{4}{\pi}\right)} \quad \cdots \quad (3)$$

In the expressions (2) and (3), when a wall thickness of the pipe is assumed to be t, and a unit length of the pipe is assumed to be L, the second moment of area I is expressed as $I=Lt^3/12$. Specifically, the pipe rigidity K is determined by the elasticity modulus E of the pipe, the wall thickness t, and the radius R of the pipe. Among those variables, the radius R of the pipe can be generally known from a drawing and the like of the pipe. Further, the elasticity modulus E and the wall thickness t of the pipe may change with deterioration of the pipe. Thus, in the present example embodiment, the pipe rigidity variable estimating unit 120 estimates, as one example of the parameter relating to the rigidity of the pipe, either one or both of the elasticity modulus E of the pipe or/and a value of the wall thickness t of the pipe. The parameter acquired by the pipe rigidity variable estimating unit 120 may be appropriately determined according to a relation and the like used in the strength estimating unit 130 to be described later.

The expression of the frequency response function model is expressed as $H(\omega|\theta_M, \theta_F)$, as a function of an angular frequency $\omega$, a pipe rigidity variable $\theta_M$, and an accessory parameter $\theta_F$. The pipe rigidity variable $\theta_M$ is a parameter relating to the rigidity of the pipe, and is defined as $\theta_M=[E, t, R]$. The accessory parameter $\theta_F$ is a parameter relating to a structure of an accessory such as the accessories 302 illustrated in Fig. 2, and is defined as $\theta_F=[m, k, c]$. E, t, and R included in the pipe rigidity variable $\theta_M$ indicate, as described above, the elasticity modulus, the wall thickness of the pipe, and the radius of the pipe, respectively. The radius R is acquired from a drawing of the pipe, a description of configuration information of the pipe, and the like. The elasticity modulus E and the wall thickness t are estimated by the pipe rigidity variable estimating unit 120. Regarding the accessory parameter $\theta_F$, m, k, and c respectively indicate an equivalent mass, an equivalent rigidity, and an equivalent damping coefficient when the accessory is modeled. Each parameter included in the accessory parameter $\theta_F$ is previously determined according to actual values of the accessories 302 to which the exciter 161 and the measuring instrument 162 are attached. Those values are acquired from, for example, a drawing of the pipe or a description of configuration information of the pipe, a result of an actual measurement, and the like.

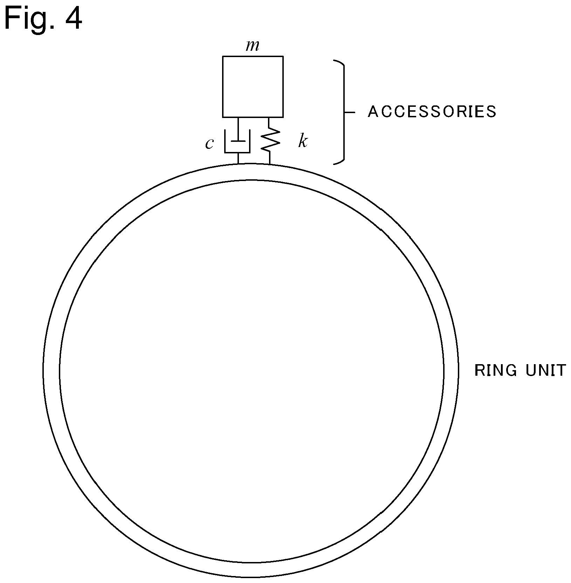

A frequency response function model with respect to an example illustrated in Fig. 4, in which a spring, a mass, and a damper are connected to a ring is assumed. In the example illustrated in Fig. 4, a ring unit corresponds to the pipe 301 illustrated in Fig. 2, and accessories correspond to the accessories 302 illustrated in Fig. 2. The expression $H(\omega|\theta_M, \theta_F)$ of the frequency response function model with respect to the example is expressed by the following expressions (4) and (5).

$$H\ (\omega|\theta_M, \theta_F) = \frac{3\pi\ (\ k+jc\omega\ )}{4D(\omega)} \quad \cdots \quad (4)$$

$$D\ (\omega) = \{\ K+\ k-M\omega^2+j\omega(\ C+c)\}\ \{\ k-m\omega^2+jc\omega\} - (\ k+jc\omega\ )^2 \quad \cdots \quad (5)$$

In the expression (5), M, K, and C respectively indicate an equivalent mass, an equivalent rigidity, and an equivalent damping coefficient when the ring unit illustrated in Fig. 4 is represented by a simple model of the mass, the spring, and the damper.

Note that, the expression $H(\omega|\theta_M, \theta_F)$ of the frequency response function model expressed by the expressions (4) and (5) is assumed in a case in which the exciter 161 and the measuring instrument 162 are attached to the accessories. However, as described above, a position to which the exciter 161 or the measuring instrument 162 is attached is not limited thereto, and in such a case, for example, each accessory parameter $\theta_F$ may be set to an appropriate value.

The pipe rigidity variable estimating unit 120 acquires an estimated value of the pipe rigidity variable by approximating the expression $H(\omega|\theta_M, \theta_F)$ of the frequency response function model to the frequency response function $H_{exp}(\omega)$ acquired by the frequency response calculating unit 110. Specifically, the pipe rigidity variable estimating unit 120 acquires the estimated value of the pipe rigidity variable by approximating $H(\omega|\theta_M, \theta_F)$ to $H_{exp}(\omega)$ in such a way that a difference between $H(\omega|\theta_M, \theta_F)$ and $H_{exp}(\omega)$ is within a predetermined range. The pipe rigidity variable estimating unit 120 acquires the estimated value of the pipe rigidity variable by using the following expression (6), for example.

$$\hat{\theta}_M = \mathrm{argmin} \left[ \sum_i^N \| H(\omega_i | \theta_M, \theta_F) - H_{exp}(\omega_i) \|^2 \right] \quad \cdots \quad (6)$$

Hereinafter, a left-side value of the expression (6) is referred to as "the estimated value of the pipe rigidity variable". In the expression (6), argmin indicates a set of arguments that minimizes the function given in the brackets. Specifically, the pipe rigidity variable estimating unit 120 acquires the estimated value of the pipe rigidity variable in such a way that a sum of squares of an absolute value of the difference between $H(\omega|\theta_M, \theta_F)$ and $H_{exp}(\omega)$ is minimized.

The pipe rigidity variable estimating unit 120 acquires the estimated value of the pipe rigidity variable by using, for example, a nonlinear optimization method such as a Levenberg-Marquardt method.

The strength estimating unit 130 estimates strength of the pipe, on the basis of a relation between the parameter estimated by the pipe rigidity variable estimating unit 120 and the strength of the pipe. The strength estimating unit 130 estimates, mainly as the strength of the pipe, tensile strength of the pipe. The tensile strength of the pipe may change with deterioration of the pipe. Specifically, a degree of deterioration of the pipe is estimated by acquiring the tensile strength of the pipe.

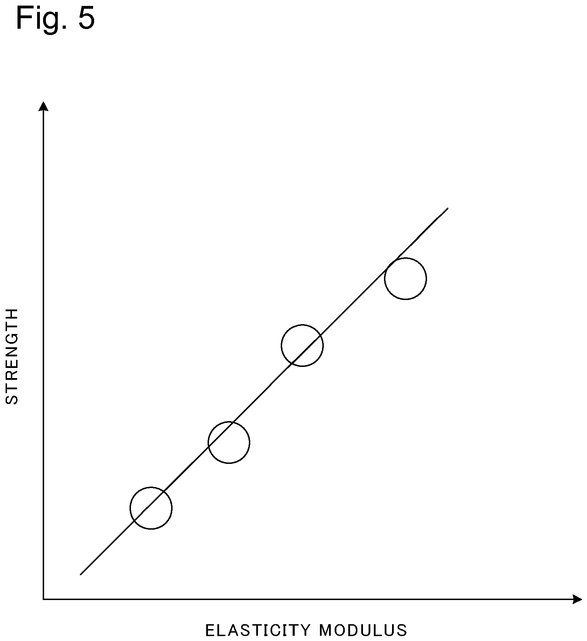

The strength estimating unit 130 estimates the strength of the pipe by using, for example, a relation, as illustrated in Fig. 5, between any one parameter relating to rigidity of the pipe and strength of the pipe, or a strength estimation equation generated from the relation illustrated in Fig. 5. Fig. 5 is an example illustrating a relation between an elasticity modulus, which is one of parameters relating to the rigidity of the pipe, and strength of the pipe. Specifically, the strength estimating unit 130 estimates the strength of the pipe according to the parameter by applying some or all of the parameters estimated by the pipe rigidity variable estimating unit 120 to the above-described relation.

The relation illustrated in Fig. 5 is acquired by, as one example, previously conducting an actual measurement by using a sample pipe. However, as the relation, a relation acquired by another means may be used. Further, the relation between the parameter relating to the rigidity of the pipe and the strength of the pipe is, for example, previously stored in the strength information storing unit 152. The strength estimating unit 130 refers to, as one of operation examples, being previously stored in the strength information storing unit 152, as appropriate, and estimates the strength of the pipe. Further, when a relation between any one of the parameters estimated by the pipe rigidity variable estimating unit 120 and strength of the pipe is acquired similarly to the relation and a relational expression illustrated in Fig. 5, strength other than tensile strength may be acquired by the strength estimating unit 130. In this case, the strength estimating unit 130 acquires, for example, bending strength, compression strength, or yield stress.

The tensile strength, which is one of the strengths acquired by the strength estimating unit 130, is related to deterioration of the pipe. Specifically, the tensile strength indicates a degree of deterioration of the pipe. Therefore, the degree of deterioration of the pipe can be estimated by estimating the tensile strength.

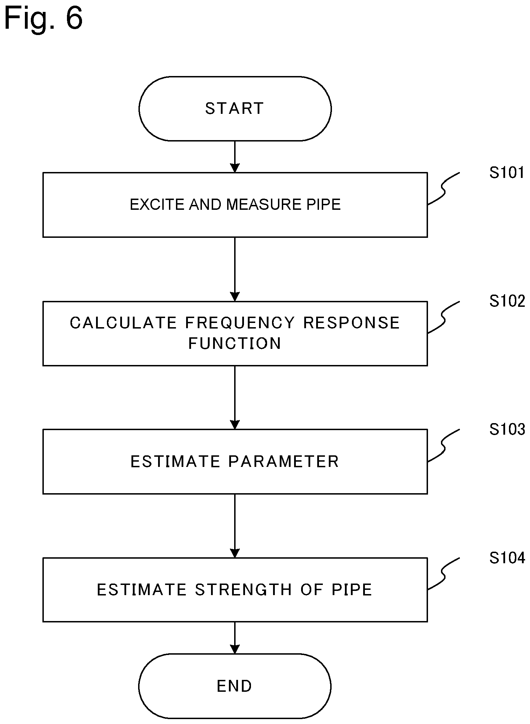

Next, an operation of the estimating device 100 according to the present example embodiment is described with reference to the flowchart illustrated in Fig. 6.

First, excitation of the pipe, and measurement of a vibration response of the pipe and the fluid inside the pipe to the excitation are performed (Step S101).

In the configuration example illustrated in Fig. 2, the exciter 161 excites the accessory 302-1. Thereby, an elastic wave is excited in a fluid inside the pipe 301, and the pipe 301. Further, the measuring instrument 162 measures, via the accessory 302-2, vibration including the elastic wave generated by the excitation by the exciter 161. Thereby, data representing an excitation force and a vibration response are acquired. The data representing the excitation force and the vibration response acquired in Step S101 are sent to the frequency response calculating unit 110 via a communication network or another means.

Next, the frequency response calculating unit 110 acquires a frequency response function of the pipe, on the basis of the excitation force and the vibration response acquired in Step S101, (Step S102).

Next, the pipe rigidity variable estimating unit 120 estimates a parameter, on the basis of the frequency response function model in which a frequency response of the pipe is modeled and the frequency response function of the pipe acquired in Step S102 (Step S103). As described above, the pipe rigidity variable estimating unit 120 estimates, as one example, the elasticity modulus E and the wall thickness t of the pipe, which are values each included in the pipe rigidity variable $\theta_M$.

Next, the strength estimating unit 130 estimates strength of the pipe, on the basis of the parameter relating to rigidity of the pipe acquired in Step S103, and a relation between the parameter and the strength of the pipe (Step S104). As the relation between the parameter and the strength of the pipe, a relation stored in the strength information storing unit 152 is used. Further, as described above, tensile strength of the pipe is estimated as the strength of the pipe. The acquired strength of the pipe is output via any means including a display and a communication network, as appropriate.

As described above, the estimating device 100 according to the present example embodiment estimates the parameter relating to the rigidity of the pipe, on the basis of the frequency response function model representing the frequency response of the pipe, and the frequency response function calculated on the basis of an actually measured value. Then, the estimating device 100 according to the present example embodiment estimates the strength of the pipe including the tensile strength, on the basis of the relation between the estimated parameter and the strength of the pipe.

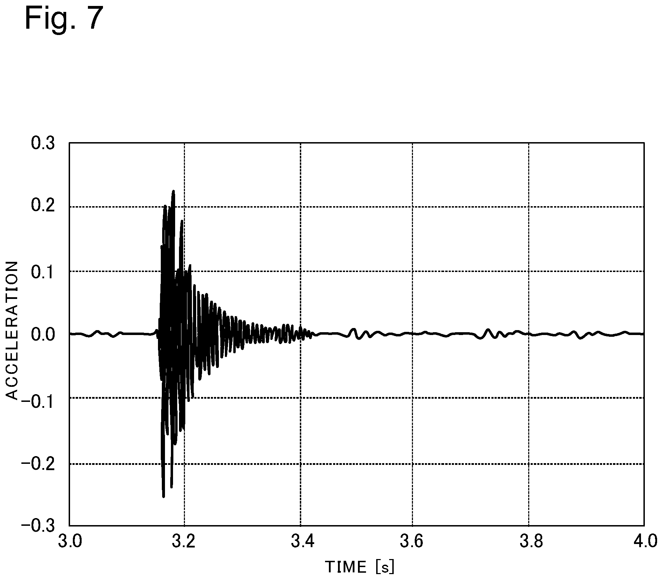

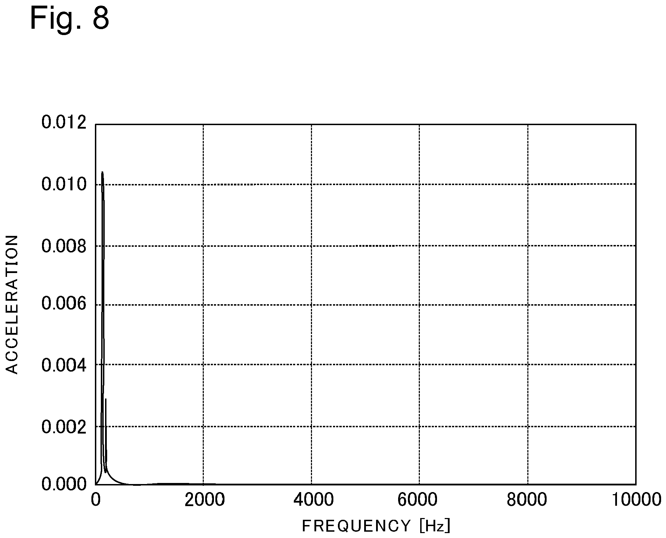

The estimating device 100 is further described in comparison with the method described in PTL 1, by using a more detailed example. Fig. 7 is a measurement example of a response time waveform measured in a water-filled pipe filled with water inside the pipe. The response time waveform illustrated in Fig. 7 is one of actual examples of response data. Further, Fig. 8 is a response spectrum with respect to the response time waveform illustrated in Fig. 7. The response time waveform and its response spectrum illustrated in Figs. 7 and 8 are examples of a case where a measurement is performed when a distance between the accessory on which the exciter 161 is installed and the accessory on which the measuring instrument 162 is installed is about 100 m (meters).

Referring to Fig. 8, a resonance peak, which is a frequency component at which acceleration increases, appears in a domain of approximately 500 Hz (Hertz) or less. In the example illustrated in Fig. 8, the resonance peak is single. As in this example, generally, in a buried water-filled pipe such as a water pipe, an interval at which accessories are installed is often several tens of meters or more. Therefore, a high frequency component of an elastic wave excited by the exciter 161 and propagating through a fluid inside the pipe and the pipe is attenuated before being measured by the measuring instrument 162. As a result, in the response spectrum with respect to the response data measured in the measuring instrument 162, frequency of the resonance peak may be 500 Hz or less.

On the other hand, in the method described in PTL 1, an interval between a striking unit and a vibration receiving unit is assumed to be about several meters at most. Further, in the method described in PTL 1, a frequency domain of 0.5 kHz (kilohertz) to 7.0 kHz is assumed to be an entire frequency domain, and a frequency domain of 3.5 kHz to 7.0 kHz is assumed to be a high frequency domain. Then, strength of a pipe is estimated on the basis of an area ratio of the high frequency domain to the entire frequency domain.

However, it may be difficult to dispose the striking unit and the vibration receiving unit on a buried water-filled pipe at the interval assumed in PTL 1. Further, as described in Figs. 7 and 8, in a vibration response measured in the buried water-filled pipe, an elastic wave in a frequency domain corresponding to the high frequency domain in PTL 1 is attenuated. Specifically, it may not be necessarily easy to apply the method described in PTL 1 to a buried water-filled pipe.

On the other hand, in the estimating device 100 according to the present example embodiment, the pipe rigidity variable $\theta_M$ described above is acquired by using the frequency response function model according to a generation mechanism of a resonance peak in the response spectrum with respect to the response data. Specifically, in the estimating device 100 according to the present example embodiment, a parameter relating to the rigidity of the pipe is acquired by using an appropriate frequency response function model. Since the parameter relating to the rigidity of the pipe is acquired, strength of the pipe such as tensile strength is estimated in the estimating device 100. Specifically, the estimating device 100 according to the present example embodiment can estimate the strength of the water-filled pipe with ease.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims. Further, a configuration according to each example embodiment may be combined with each other without departing from the scope of the present invention.

This application is based upon and claims the benefit of priority from Japanese patent application No. 2017-215729 filed on November 8, 2017.

**[Reference signs List]**

100    Estimating device
110    Frequency response calculating unit

| | |
|---|---|
| 120 | Pipe rigidity variable estimating unit |
| 130 | Strength estimating unit |
| 151 | Accessory information storing unit |
| 152 | Strength information storing unit |
| 161 | Exciter |
| 162 | Measuring instrument |
| 301 | Pipe |
| 302 | Accessory |

**Claims**

1. An estimating device comprising:

   frequency response calculating means (110) for calculating, based on an excitation force when a pipe is excited and a vibration response, a frequency response function of the pipe, by Fourier transforming the excitation force and the vibration response, the vibration response being acquired by measuring an elastic wave propagating through the pipe by the excitation force;
   pipe rigidity variable estimating means (120) for acquiring, based on i) the calculated frequency response function, and ii) a frequency response function model representing a frequency response of the pipe and being expressed as a function of a rigidity variable of the pipe, an estimated value of the rigidity variable, the rigidity variable being a parameter relating to rigidity of the pipe; and
   strength estimating means (130) for estimating, based on a relation between the estimated value of the rigidity variable and strength of the pipe, the strength of the pipe,
   wherein the pipe rigidity variable estimating means (120) is configured to acquire the estimated value of the rigidity variable by approximating the frequency response function model to the frequency response function.

2. The estimating device according to claim 1, wherein
   the pipe rigidity variable estimating means (120) acquires the estimated value of the rigidity variable in such a way that a difference between the frequency response function model and the frequency response function is within a predetermined range.

3. The estimating device according to claim 1 or 2, wherein
   the parameter is at least either one of an elasticity modulus of the pipe or a wall thickness of the pipe.

4. The estimating device according to any one of claims 1 to 3, wherein
   the strength estimating means (130) estimates, as the strength, tensile strength.

5. The estimating device according to any one of claims 1 to 4, wherein the relation is a relation between an elasticity modulus and tensile strength of the pipe.

6. A computer-implemented estimating method comprising:

   calculating, based on an excitation force when a pipe is excited and a vibration response, a frequency response function of the pipe, by Fourier transforming the excitation force and the vibration response, the vibration response being acquired by measuring an elastic wave propagating through the pipe by the excitation force;
   acquiring, based on i) the calculated frequency response function, and ii) a frequency response function model representing a frequency response of the pipe and being expressed as a function of a rigidity variable of the pipe, an estimated value of the rigidity variable, the rigidity variable being a parameter relating to rigidity of the pipe; and
   estimating, based on a relation between the estimated value of the rigidity variable and strength of the pipe, the strength of the pipe,
   wherein the estimated value of the rigidity variable is acquired by approximating the frequency response function model to the frequency response function.

7. A computer program causing a computer to execute the method according to claim 6.

**Patentansprüche**

1. Schätzvorrichtung, umfassend:

   eine Frequenzantwort-Berechnungseinrichtung (110) zum Berechnen, basierend auf einer Anregungskraft, wenn ein Rohr angeregt wird, und einer Schwingungsantwort, einer Frequenzantwortfunktion des Rohrs durch Ausführen einer Fourier-Transformation an der Anregungskraft und der Schwingungsantwort, wobei die Schwingungsantwort durch Messen einer sich durch das Rohr durch die Anregungskraft ausbreitenden elastischen Welle erlangt wird,
   eine Rohrsteifigkeitsvariablen-Schätzeinrichtung (120) zum Erlangen, basierend auf i) der berechneten Frequenzantwortfunktion und ii) einem Frequenzantwortfunktionsmodell, das eine Frequenzantwort des Rohrs darstellt und als Funktion einer Steifigkeitsvariablen des Rohrs ausgedrückt wird, eines geschätzten Werts der Steifigkeitsvariablen, wobei die Steifigkeitsvariable ein Parameter bezüglich einer Steifigkeit des Rohrs ist; und
   eine Festigkeits-Schätzeinrichtung (130) zum Schätzen, basierend auf einer Beziehung zwischen dem geschätzten Wert der Steifigkeitsvariablen und einer Festigkeit des Rohrs, der Festigkeit des Rohrs,
   wobei die Rohrsteifigkeitsvariablen-Schätzeinrichtung (120) konfiguriert ist, um den geschätzten Wert der Steifigkeitsvariablen durch Approximieren des Frequenzantwortfunktionsmodell an die Frequenzantwortfunktion zu erlangen.

2. Schätzvorrichtung nach Anspruch 1, wobei
   die Rohrsteifigkeitsvariablen-Schätzeinrichtung (120) den geschätzten Wert der Steifigkeitsvariablen auf solche Weise erlangt, dass eine Differenz zwischen dem Frequenzantwortfunktionsmodell und der Frequenzantwortfunktion innerhalb eines vorbestimmten Bereichs ist.

3. Schätzvorrichtung nach Anspruch 1 oder 2, wobei
   der Parameter wenigstens entweder eines von einem Elastizitätsmodul des Rohrs oder einer Wanddicke des Rohrs ist.

4. Schätzvorrichtung nach einem der Ansprüche 1 bis 3, wobei
   die Festigkeits-Schätzeinrichtung (130) als die Festigkeit die Zugfestigkeit schätzt.

5. Schätzvorrichtung nach einem der Ansprüche 1 bis 4, wobei
   die Beziehung eine Beziehung zwischen einem Elastizitätsmodul und einer Zugfestigkeit des Rohrs ist.

6. Computerimplementiertes Schätzverfahren, umfassend:

   Berechnen, basierend auf einer Anregungskraft, wenn ein Rohr angeregt wird, und einer Schwingungsantwort, einer Frequenzantwortfunktion des Rohrs durch Ausführen einer Fourier-Transformation an der Anregungskraft und der Schwingungsantwort, wobei die Schwingungsantwort durch Messen einer sich durch das Rohr durch die Anregungskraft ausbreitenden elastischen Welle erlangt wird,
   Erlangen, basierend auf i) der berechneten Frequenzantwortfunktion und ii) einem Frequenzantwortfunktionsmodell, das eine Frequenzantwort des Rohrs darstellt und als Funktion einer Steifigkeitsvariablen des Rohrs ausgedrückt wird, eines geschätzten Werts der Steifigkeitsvariablen, wobei die Steifigkeitsvariable ein Parameter bezüglich einer Steifigkeit des Rohrs ist; und
   Schätzen, basierend auf einer Beziehung zwischen dem geschätzten Wert der Steifigkeitsvariablen und einer Festigkeit des Rohrs, der Festigkeit des Rohrs,
   wobei der geschätzte Wert der Steifigkeitsvariablen durch Approximieren des Frequenzantwortfunktionsmodell an die Frequenzantwortfunktion erlangt wird.

7. Computerprogramm, das veranlasst, dass ein Computer das Verfahren nach Anspruch 6 ausführt.

**Revendications**

1. Dispositif d'estimation comprenant :

   un moyen de calcul de réponse en fréquence (110) pour calculer, sur la base d'une force d'excitation lorsqu'un tuyau est excité et d'une réponse vibratoire, une fonction de réponse en fréquence du tuyau, par transformation de Fourier de la force d'excitation et de la réponse vibratoire, la réponse vibratoire étant acquise en mesurant une onde élastique se propageant à travers le tuyau sous l'effet de la force d'excitation ;

un moyen d'estimation de variable de rigidité de tuyau (120) pour acquérir, sur la base i) de la fonction de réponse en fréquence calculée, et ii) d'un modèle de fonction de réponse en fréquence représentant une réponse en fréquence du tuyau et exprimée en fonction d'une variable de rigidité du tuyau, une valeur estimée de la variable de rigidité, la variable de rigidité étant un paramètre relatif à la rigidité du tuyau ; et

un moyen d'estimation de résistance (130) pour estimer, sur la base d'une relation entre la valeur estimée de la variable de rigidité et la résistance du tuyau, la résistance du tuyau,

dans lequel le moyen d'estimation de variable de rigidité de tuyau (120) est configuré pour acquérir la valeur estimée de la variable de rigidité en approximant le modèle de fonction de réponse en fréquence à la fonction de réponse en fréquence.

2. Dispositif d'estimation selon la revendication 1, dans lequel

le moyen d'estimation de variable de rigidité de tuyau (120) acquiert la valeur estimée de la variable de rigidité de telle sorte qu'une différence entre le modèle de fonction de réponse en fréquence et la fonction de réponse en fréquence soit dans une plage prédéterminée.

3. Dispositif d'estimation selon la revendication 1 ou 2, dans lequel

le paramètre est au moins l'un ou l'autre parmi un module d'élasticité du tuyau ou une épaisseur de paroi du tuyau.

4. Dispositif d'estimation selon l'une quelconque des revendications 1 à 3, dans lequel

le moyen d'estimation de résistance (130) estime, en tant que résistance, la résistance à la traction.

5. Dispositif d'estimation selon l'une quelconque des revendications 1 à 4, dans lequel la relation est une relation entre un module d'élasticité et la résistance à la traction du tuyau.

6. Procédé d'estimation implémenté par ordinateur comprenant :

le calcul, sur la base d'une force d'excitation lorsqu'un tuyau est excité et d'une réponse vibratoire, d'une fonction de réponse en fréquence du tuyau, par transformation de Fourier de la force d'excitation et de la réponse vibratoire, la réponse vibratoire étant acquise en mesurant une onde élastique se propageant à travers le tuyau sous l'effet de la force d'excitation ;

l'acquisition, sur la base i) de la fonction de réponse en fréquence calculée, et ii) d'un modèle de fonction de réponse en fréquence représentant une réponse en fréquence du tuyau et exprimée en fonction d'une variable de rigidité du tuyau, d'une valeur estimée de la variable de rigidité, la variable de rigidité étant un paramètre relatif à la rigidité du tuyau ; et

l'estimation, sur la base d'une relation entre la valeur estimée de la variable de rigidité et la résistance du tuyau, de la résistance du tuyau,

dans lequel la valeur estimée de la variable de rigidité est acquise en approximant le modèle de fonction de réponse en fréquence à la fonction de réponse en fréquence.

7. Programme d'ordinateur amenant un ordinateur à exécuter le procédé selon la revendication 6.

# Fig. 1

100

| FREQUENCY RESPONSE CALCULATING UNIT | 110 |
| PIPE RIGIDITY VARIABLE ESTIMATING UNIT | 120 |
| STRENGTH ESTIMATING UNIT | 130 |

Fig. 2

## Fig. 3A

## Fig. 3B

# Fig. 4

$m$

ACCESSORIES

$c$ $k$

RING UNIT

# Fig. 5

# Fig. 6

```
              ┌─────────────┐
              │    START    │
              └──────┬──────┘
                     │
                     ▼
         ┌───────────────────────┐         S101
         │  EXCITE AND MEASURE   │
         │         PIPE          │
         └───────────┬───────────┘
                     │
                     ▼
         ┌───────────────────────┐         S102
         │ CALCULATE FREQUENCY   │
         │  RESPONSE FUNCTION    │
         └───────────┬───────────┘
                     │
                     ▼
         ┌───────────────────────┐         S103
         │  ESTIMATE PARAMETER   │
         └───────────┬───────────┘
                     │
                     ▼
         ┌───────────────────────┐         S104
         │ ESTIMATE STRENGTH OF  │
         │         PIPE          │
         └───────────┬───────────┘
                     │
                     ▼
              ┌─────────────┐
              │     END     │
              └─────────────┘
```

## Fig. 7

Fig. 8

## Fig. 9

EP 3 708 992 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012118047 A
- US 2008078247 A1
- WO 2016194331 A1
- JP 2017215729 A